# EUROPÄISCHE PATENTSCHRIFT

(11) **EP 2 283 926 B1**
(45) Veröffentlichungstag und Bekanntmachung des Hinweises auf die Patenterteilung: **14.12.2016**
(21) Anmeldenummer: 10011369.5
(22) Anmeldetag: 24.01.2006
(51) Int. Cl.: B01L 3/02

(54) **Filterpipettenspitze**
Pipette Tip With Filter
Embout de pipette avec filtre

(30) Priorität: 05.02.2005 DE 102005005437
(43) Veröffentlichungstag der Anmeldung: 16.02.2011
(62) Teilanmeldung aus: 06001381.0
(73) Patentinhaber: EPPENDORF AG, 22339 Hamburg (DE)
(72) Erfinder: Reimann, Thomas, 21502 Geesthacht (DE); Ziegmann, Christian, 22926 Ahrensburg (DE)
(74) Vertreter: Hauck Patentanwaltspartnerschaft mbB

(56) Entgegenhaltungen:
- EP-A- 1 095 703
- WO-A-00/29112
- WO-A-97/26540
- WO-A-99/06149
- WO-A-99/67647
- WO-A2-02/36708
- DE-A1- 3 635 598
- DE-U1- 9 108 319
- US-A- 5 364 595
- US-A- 6 045 757
- US-A- 6 123 905
- US-A1- 2002 123 156
- US-A1- 2003 099 576
- US-B1- 6 451 260

## Beschreibung

Die Erfindung bezieht sich auf eine Filterpipettenspitze.

Pipettenspitzen werden zusammen mit Pipetten zum Dosieren von Flüssigkeiten verwendet. Pipettenspitzen sind als Röhrchen mit einer verhältnismäßig großen Öffnung am einen Ende zum Verbinden mit einer Pipette, einer verhältnismäßig kleinen Öffnung am anderen Ende für den Durchgang von Flüssigkeit und einem Durchgangskanal zwischen der großen Öffnung und der kleinen Öffnung ausgebildet. Pipetten weisen einen Aufnahmeschaft zum Aufstecken der großen Öffnung oder eine Aufnahme zum Einstecken des einen Endes der Pipettenspitze auf. Ferner haben sie eine Gasverdrängungseinrichtung, die zumeist als Kolben-Zylinder-Einheit ausgeführt ist. Die Gasverdrängungseinrichtung ist über eine Durchgangsöffnung des Aufnahmeschaftes oder der Aufnahme mit der großen Öffnung der lösbar an der Pipette gehaltenen Pipettenspitze verbunden.

Mittels der Gasverdrängungseinrichtung wird eine Luftsäule oder ein andere Gassäule verschoben, um Flüssigkeit in die Pipettenspitze einzusaugen und aus dieser auszustoßen. Wird die Gassäule von der Pipettenspitze weg verschoben, wird eine bestimmte Flüssigkeitsmenge durch die kleine Öffnung in den Durchgangskanal der Pipettenspitze eingesogen. Durch Verschieben der Gassäule zur Pipettenspitze hin wird eine Flüssigkeitsmenge aus dem Durchgangskanal durch die kleine Öffnung abgegeben.

Pipettenspitzen werden meistens nach erfolgter Dosierung gegen frische Pipettenspitzen ausgetauscht, um eine Verunreinigung nachfolgend pipettierter Flüssigkeiten durch Restflüssigkeit zu vermeiden. Pipettenspitzen für den Einmalgebrauch sind meistens aus Kunststoff ausgeführt.

Beim Aufnehmen und Abgeben von Flüssigkeit können feinste Tröpfchen der Flüssigkeit aus der Pipettenspitze in die Pipette gelangen. Bei übermäßiger Gasverdrängung können auch große Mengen der Flüssigkeit durch die große Öffnung in die Pipette eingesogen werden. Diese Flüssigkeit kann bei nachfolgenden Pipettierungen in die Pipettenspitze gelangen. Infolgedessen kann es zur Verunreinigung von Proben kommen.

Zur Vermeidung einer Verunreinigung der Pipette sind bereits Filterpipettenspitzen bekannt. Diese haben einen den Querschnitt des Durchgangskanals ausfüllenden, porösen Filter. Der Filter ist meist in der Nähe der großen Öffnung angeordnet. Er ist z.B. in den Durchgangskanal des Röhrchens eingepreßt bzw. an mindestens einem Vorsprung im Durchgangskanal abgestützt. Der Bereich des Durchgangskanals zwischen Filter und kleiner Öffnung dient der Aufnahme von Flüssigkeit. Der Filter hält Aerosole und Flüssigkeit in der Filterpipettenspitze zurück, so daß sie nicht durch die große Öffnung in die Pipette gelangen. Filter sind z.B. als poröse Stöpsel aus Kunststoff ausgebildet. Sie können durch Sintern kleinster Kunststoffpartikel gebildet sein.

Bekannte Filter haben eine unzureichende Sperrwirkung für Aerosole und Flüssigkeiten. Bekannt sind bereits Filter mit einem Additiv, das bei

Flüssigkeitskontakt die Poren des Filters verstopft. Diese Filter sind zwar flüssigkeitsdicht, lassen jedoch Aerosole durch. Das Additiv kann auskrümeln bzw. ausbluten und eine Probe kontaminieren. Außerdem kann die oftmals wertvolle Flüssigkeit bei Kontakt mit dem Filter kontaminiert bzw. schlecht wiedergewonnen werden. Das verstopfte Filter läßt nämlich ein Ausstoßen der Probe nicht zu.

Aus der DE 36 35 598 C2 ist eine Filterpipettenspitze bekannt, bei der der Filter aus mehreren Schichten ausgeführt, die scheibenweise übereinander angeordnet sind und progressive Filterwirkung aufweisen, indem sich die Durchlässigkeit von Scheibe zu Scheibe ändert, insbesondere abnimmt. Gemäß einer Ausgestaltung sind Scheiben verschiedener Dichte übereinandergeschichtet. Durchgehende Medien kommen bei zunehmender Dichte mehrfach mit Wandteilen von Kapillardurchgängen in Berührung. Dieses kann zur Auslösung von Reaktionen ausgenutzt werden, aber an sich auch für eine gesteigerte Filterwirkung, wenn nämlich die Saug- oder Druckkraft eine bestimmte Höhe erreicht oder überschreitet. Somit weist die Filterpipettenspitze einen erhöhten Druckverlust auf, der Dosierungsungenauigkeiten oder Fehlbedienungen zur Folge haben kann.

Eine Vielzahl Filterpipettenspitzen mit unterschiedlichen Eigenschaften ist bekannt. So werden zur Aufnahme unterschiedlicher Dosiermengen Filterpipettenspitzen mit verschiedenen Abmessungen zur Verfügung gestellt. Außerdem sind Filterpipettenspitzen bekannt, deren Filter bei Kontakt mit Flüssigkeiten in einer bestimmten Weise reagieren, z.B. verstopfen oder ihre Farbe ändern. Ferner sind Filterpipettenspitzen aus unterschiedlichen Materialien und Filterpipettenspitzen mit unterschiedlichen Reinheitsgraden bekannt. Die Unterscheidung der unterschiedlichen Filterpipettenspitzen aufgrund ihres äußeren Erscheinungsbildes ist problematisch.

Die WO 97/26540 beschreibt ein Verfahren und eine Vorrichtung zur Minifiltration, wobei Flüssigkeitsmengen kleiner als 100 Mikroliter filtriert werden. Eine Filterpipettenspitze umfasst einen Filter, der aus einem einzigen oder aus mehreren Filtern bestehen kann, die in eine Pipettenspitze hineingepresst sind. Die Filter können auch separat gekauft und dann in die Pipettenspitzen eingefügt werden. Für eine einzige Filterschicht sind Porengrößen angegeben.

Die EP 1 095 703 A, WO 02/36708 A2 und US 5,364,595 beschreiben Filterpipettenspitzen, bei denen jeweils für eine einzige Filterschicht Porengrößen angegeben sind.

Davon ausgehend liegt der Erfindung die Aufgabe zugrunde, eine Filterpipettenspitze zu schaffen, die ohne Beeinträchtigung der Pipettierung eine verbesserte Sperrwirkung aufweist. Diese Aufgabe wird durch eine Filterpipettenspitze mit den Merkmalen des Anspruchs 1 gelöst.

Ferner soll eine Filterpipettenspitze zur Verfügung gestellt werden, die eine Unterscheidung von Filterpipettenspitzen mit anderen Eigenschaften erleichtert. Diese Aufgabe wird durch eine Filterpipettenspitze mit den Merkmalen des Anspruches 8 gelöst.

Gemäß Anspruch 1 hat die Filterpipettenspitze ein Röhrchen mit einer verhältnismäßig großen Öffnung am einen Ende zum Verbinden mit einer Pipette, einer verhältnismäßig kleinen Öffnung am anderen Ende für den Durchgang von Flüssigkeit und einem Durchgangskanal zwischen der großen Öffnung und der kleinen Öffnung und einem im Durchgangskanal angeordneten, einen Abschnitt des Durchgangskanals ausfüllenden, porösen Filter umfassend mindestens zwei in Richtung des Durchgangskanals hintereinander angeordnete Schichten, von denen eine feinporige Schicht der großen Öffnung zugekehrt ist und eine Porengröße von maximal 20 µm und eine der kleinen Öffnung zugekehrte grobporige Schicht eine Porengröße von 20 bis 50 µm aufweist, die beiden Schichten unterschiedliche Porengrößen aufweisen und die Schichten des Filters zu einem einteiligen Filterkörper miteinander verbunden sind, wobei der Durchgangskanal zwischen kleiner Öffnung und Filter ein Aufnahmevolumen zum Aufnehmen einer flüssigen Probe umfasst und zwischen Filter und großer Öffnung ein Kanal zum Verlagern einer Gassäule ist.

Die grobporige Schicht des Filters mit einer Porengröße von 20 bis 50 µm dient der Volumen- und Vorfiltration. Diese Schicht wird nachfolgend auch grobporige Schicht genannt. Die grobporige Schicht bietet einem durchgehenden Fluid eine Vielzahl Hindernisse, an denen Tröpfchen bzw. Partikel hängen bleiben können. Die feinporige Schicht des Filters mit einer Porengröße von maximal 20 µm trennt insbesondere Tröpfchen bzw. Partikel mit die Porengröße übersteigenden Abmessungen ab, die durch die grobporige Schicht hindurch gelangen. Diese Schicht wird nachfolgend auch feinporige Schicht genannt. Auch die adsorptive Filterwirkung auf kleinere Partikel wird in der feinporigen Schicht optimal ausgenutzt. Die Abtrennung ist nahezu vollständig, weil die feinporige Schicht einen Abschnitt des Durchgangskanals ausfüllt und damit den Querschnitt des Durchgangskanals versperrt. Die Sperrwirkung übersteigt die Sperrwirkung herkömmlicher, einschichtiger Filter, bei denen die kleinen und großen Poren über das gesamte Volumen verteilt sind, so daß die kleinen Poren nicht in der Lage sind, feinste Tröpfchen bzw. Partikel vollständig zurückzuhalten. Da der Filter aus einer grobporigen und einer feinporigen Schicht zusammengesetzt ist, kann der Druckverlust dem Druckverlust herkömmlicher, einschichtiger Filter entsprechen, so daß die Dosiergenauigkeit nicht beeinträchtigt wird. Anders als bei dem bekannten mehrschichtigen Filter ist eine erhöhte Saug- oder Druckkraft für das Erreichen der gesteigerten Filterwirkung nicht erforderlich. Die Filterspitze ist insbesondere einsetzbar beim Pipettieren zum Verhindern des Eindringens von Aerosolen oder Biomolekülen (z.B. DNA) in die Pipette oder zum Abtrennen von flüssigen oder festen Partikeln aus einer Flüssigkeit bei der Filtration oder Extraktion.

Die Bestimmung der Porengröße der Schichten der erfindungsgemäßen Filterpipettenspitze erfolgt durch Quecksilberintrusion wie in der DIN 66133 vom Juni 1993 angegeben. Die DIN 66133 kann über den Beuth-Verlag GmbH, Burggrafenstraße 6, 10787 Berlin, bezogen werden. Die Angaben in der DIN 66133 zur Durchführung und Auswertung der Messungen werden durch Bezugnahme in die vorliegende Anmeldung einbezogen. Die Messung der Porengröße erfolgt für die Schichten getrennt nach Zerlegung des Filters (z.B. durch Zerschneiden mittels Skalpell) in seine beiden Schichten oder in Abschnitte davon.

Die Porengrößen der feinporigen Schicht und der grobporigen Schicht sind unterschiedlich, so daß bei einer Porengröße der feinporigen Schicht von 20 µm die Porengröße der grobporigen Schicht mehr als 20 µm beträgt. Bei einer Porengröße der grobporigen Schicht von 20 µm beträgt die Porengröße der feinporigen Schicht unter 20 µm. Gemäß einer Ausgestaltung ist die Porengröße der feinporigen Schicht mindestens 5 µm kleiner als die Porengröße der grobporigen Schicht. Gemäß einer weiteren Ausgestaltung ist sie 10 bis 40 µm kleiner.

Gemäß einer Ausgestaltung hat die feinporige Schicht eine Porengröße von maximal 10 µm. Gemäß einer weiteren Ausgestaltung hat die grobporige Schicht eine Porengröße von 20 bis 40 µm.

Die Erfindung bezieht Filterpipettenspitzen ein, bei denen die feinporige Schicht des Filters näher an der kleinen Öffnung als die grobporige Schicht angeordnet ist. Diese Ausgestaltung kann z.B. sinnvoll sein, um das Eindringen von Verunreinigungen aus einer Pipette in die Pipettenspitze zu vermeiden. Gemäß einer bevorzugten Ausgestaltung ist die feinporige Schicht näher an der großen Öffnung angeordnet als die grobporige Schicht. Diese Ausgestaltung verhindert effektiv die Verunreinigung einer Pipette.

Gemäß einer Ausgestaltung ist die Erstreckung in Richtung des Durchgangskanals der feinporigen Schicht geringer als die Erstreckung der grobporigen Schicht. Durch die verhältnismäßig dicke grobporige Schicht wird eine besonders wirksame Volumen- und Vorfiltration erreicht, die in Kombination mit der Feinfiltration durch die verhältnismäßig dünne feinporige Schicht die Sperrwirkung weiter verbessert. Einbezogen sind auch Filterpipettenspitzen, bei denen die Filter mehr als zwei Schichten aufweisen. Die Filter können z.B. beidseitig einer feinporigen Schicht eine grobporige Schicht aufweisen.

Gemäß einer Ausgestaltung hat die Filterpipettenspitze einen im Durchgangskanal angeordneten, einen Abschnitt des Durchgangskanals ausfüllenden, porösen Filter umfassend mindestens zwei in Richtung des Durchgangskanals hintereinander angeordnete Schichten, die unterschiedlich hydrophil oder unterschiedlich hydrophob sind oder von denen die eine Schicht hydrophil und die andere Schicht hydrophob ist.

Die hydrophile oder hydrophilere Schicht des Filters dient insbesondere der Bindung von Tröpfchen wässriger Flüssigkeiten. Aerosole werden von dieser Schicht bevorzugt angelagert. Ebenso bindet DNA und dgl. Biomoleküle bevorzugt an hydrophilen Oberflächen. Die hydrophobe oder hydrophobere Schicht dient bevorzugt der Anlagerung von Proteinen, die bevorzugt von hydrophoben Schichten gebunden werden. Sie weist darüber hinaus eine flüssigkeitsabweisende Charakteristik auf. Der Filter ist infolgedessen gleichsam als Aerosol- und Biomolekül-Barriere wirksam. Die Filterpipettenspitze weist eine insgesamt verbesserte Sperrwirkung auf.

Gemäß einer Ausgestaltung ist die hydrophile Schicht näher an der großen Öffnung als die hydrophobe Schicht angeordnet. Beim Pipettieren weist die hydrophobe Schicht Tröpfchen wässriger Flüssigkeiten ab und verhindert, dass diese in den Filter eintreten. Trotzdem eingetretene Tröpfchen werden von der hydrophilen Schicht gebunden und an einem Austritt aus der großen Öffnung gehindert. Biomoleküle wie DNA werden von der hydrophilen Schicht abgefangen.

Gemäß einer Ausgestaltung ist die Erstreckung in Richtung des Durchgangskanals der hydrophilen Schicht größer als die Erstreckung der hydrophoben Schicht. Hierdurch werden wässrige Flüssigkeiten besonders effektiv in der Filterpipettenspitze zurückgehalten.

Gemäß Anspruch 7 hat die Filterpipettenspitze einen im Durchgangskanal angeordneten, einen Abschnitt des Durchgangskanals ausfüllenden, porösen Filter mit mindestens einer Markierung.

Bei der Markierung handelt es sich um mindestens ein zusätzliches Merkmal des Filters, das eine Eigenschaft und/oder Ausrichtung der Filterpipettenspitze und/oder des Filters kennzeichnet. Das Merkmal ist - ggfs. nach vorheriger physikalischer oder chemischer Einwirkung - mittels eines menschlichen Sinnesorgans (z.B. das Auge) und/oder eines Sensors (z.B. ein Photosensor) feststellbar.

Die Markierung kann verschiedenen Zwecken dienen. Beispielsweise dient die Markierung der Kennzeichnung der Filterpipettenspitze. Z.B. ist einer Filterpipettenspitze mit einer bestimmten Eigenschaft eine bestimmte Markierung des Filters zugeordnet, die eine eindeutige Feststellung ermöglicht, daß es sich um eine Filterpipettenspitze mit der betreffenden Eigenschaft handelt. Die Markierung kennzeichnet z.B. das Aufnahmevolumen der Filterpipettenspitze für flüssige Probe, bestimmte Reaktionen des Filters bei Kontakt mit einer oder verschiedenen Flüssigkeiten, Materialien, aus denen die Filterpipettenspitze hergestellt ist, den Reinheitsgrad, mit der die Filterpipettenspitze bereitgestellt wird, oder den Hersteller der Filterpipettenspitze.

Ferner kann die Markierung als Originalitäts- oder Echtheitsmerkmal dienen, das es z.B. ermöglicht, die Originalität oder Echtheit der Filterpipettenspitze festzustellen. Für die Überprüfung der Originalität bzw. Echtheit ist das Filter gemäß einer Ausgestaltung mit einer Markierung versehen, die mittels technischer Hilfsmittel feststellbar ist, beispielsweise durch Prüfung des Filters mittels spezieller Untersuchungsgeräte und/oder nach chemischer oder physikalischer Einwirkung (z.B. durch Spülen mit Luft beim Pipettieren, Befeuchtung mit Reagenzien oder Erwärmung) auf das Filter, so daß sich die Markierung verändert und die Veränderung der Sinneswahrnehmung durch den Menschen oder der Feststellung mittels eines Sensors zugänglich wird.

Ferner kann die Markierung dem Zweck dienen, bei der Produktion die Ausrichtung der Filter zu erkennen, um diese lagerichtig in die Filterpipettenspitze einzubringen. Bei Filtern mit mehreren miteinander verbundenen Schichten oder einer in Axialrichtung veränderlichen Porengröße ist es mitunter nicht möglich, deren Ausrichtung auf einfache Weise zu erfassen. Hier kann die von der menschlichen Sinneswahrnehmung und/oder mittels eines Sensors gut erfassbare Markierung dazu dienen, die jeweilige Ausrichtung des Filters festzustellen, um diesen in der gewünschten Ausrichtung in den Durchgangskanal einzusetzen.

Die Markierung kann insbesondere im Hinblick auf den jeweiligen Zweck unterschiedlich gewählt werden. Beispielsweise ist sie eine von außen optisch und/oder durch Tasten erfassbare Profilierung an einer parallel zu den Schichten angeordneten Endfläche des Filters. Gemäß einer Ausgestaltung weist der Filter mindestens eine Färbung auf, die von einer herkömmlichen weißen Färbung des Filters abweicht. Hierbei ist die Markierung eine von einer weißen Färbung abweichende Färbung des Filters oder eines Teils davon. Die Färbung kann ausgewählt sein aus sämtlichen bunten Farben (z.B. blau, grün, gelb, rot) und/oder aus sämtlichen unbunten Farben mit Ausnahme von weiß (d.h. schwarz und Grautöne). Der Filter ist z.B. insgesamt mit der Färbung versehen. Wenn er nur teilweise mit der Färbung versehen ist, ist der übrige Teil ganz oder teilweise weiß und/oder weist mindestens eine von weiß abweichende weitere Färbung auf. Die Färbung kann durch Verwendung gefärbten Kunststoff-Granulats bei der Herstellung der Filter erzeugt werden. Bevorzugt werden inerte Kunststoffe verwendet, aus denen Farben nicht oder sehr schwer herauslösbar sind. Ferner werden Pigmente bevorzugt, die molekularbiologische Proben nicht verunreinigen.

Gemäß einer Ausgestaltung umfaßt der Filter mindestens zwei in Richtung des Durchgangskanals hintereinander angeordnete Schichten, welche unterschiedliche Markierungen aufweisen oder von denen die eine eine Markierung und die andere keine Markierung aufweist.

Gemäß einer Ausgestaltung weist der Filter mindestens zwei in Richtung des Durchgangskanals hintereinander angeordnete Schichten mit unterschiedlichen Färbungen auf. Bei dieser Ausgestaltung sind die Markierungen Färbungen von Schichten des Filters.

Die Färbungen des Filters sind sehr gut erkennbar. Dies kann bei der Produktion für die lagerichtige Einbringung des Filters in die Filterpipettenspitze genutzt werden. Bei der fertigen Filterpipettenspitze sind die Färbungen des Filters z.B. durch die Öffnungen des Röhrchens und/oder durch ein zumindest teilweise transparent ausgeführtes Röhrchen hindurch sehr gut erkennbar. Die Färbungen sind sehr viel besser erkennbar, als beispielsweise eine beim Spritzgießen als Profilierung oder durch Aufdrucken auf der Oberfläche des Röhrchens angebrachte Kennzeichnung. Infolgedessen sind die Färbungen eine hervorragende Kennzeichnung der Filterpipettenspitze.

Filterpipettenspitzen mit bestimmten Eigenschaften können bestimmte Färbungen des Filters zugeordnet werden, die eine eindeutige Feststellung ermöglichen, ob es sich um Filterpipettenspitzen mit den betreffenden Eigenschaften handelt. Beispielsweise können Filterpipettenspitzen, die für die Aufnahme unterschiedlicher Dosiermengen bestimmt sind, deren Filter bei Kontakt mit unterschiedlichen Flüssigkeiten in einer bestimmten Weise reagieren, die aus unterschiedlichen Materialien bestehen oder unterschiedliche Reinheitsgrade aufweisen, mit eindeutigen Kennzeichnungen versehen werden. Auch ist es möglich, mit Hilfe der Färbungen des Filters auf einen bestimmten Hersteller hinzuweisen. Die Kennzeichnungen können zur maschinellen Erkennung von Filterpipettenspitzen z.B. bei der Fertigung oder bei der Handhabung im Laborautomaten oder bei der visuellen Erkennung durch Laborpersonal genutzt werden.

Die Färbungen können ausgewählt sein aus sämtlichen bunten Farben (z.B. blau, grün, gelb, rot) und/oder unbunten Farben (schwarz, weiß und Grautöne). Die Färbungen können durch Verwendung gefärbten Kunststoff-Granulats bei der Herstellung der Filter erzeugt werden. Bevorzugt werden inerte Kunststoffe verwendet, aus denen Farben nicht oder sehr schwer herauslösbar sind. Ferner werden Pigmente bevorzugt, die molekularbiologische Proben nicht verunreinigen.

Gemäß einer weiteren Ausgestaltung ist die näher an der kleinen Öffnung angeordnete Schicht des Filters weiß. Die weiße Farbe signalisiert dem Anwender, dass die Filterpipettenspitze einen inerten Filter aufweist.

Gemäß einer Ausgestaltung weist der Filter mindestens ein fluoreszierendes Additiv auf. Hierbei ist die Markierung ein fluoreszierendes Additiv. Durch Anregung mittels geeigneter Strahlung (z.B. UV-Strahlung) ist es möglich, das fluoreszierende Additiv zur Fluoreszenz zu bringen. Dies ermöglicht eine Erkennung markierter Filter bzw. Filterspitzen bzw. ihre Ausrichtung, falls das Additiv eine bestimmte Anordnung innerhalb des Filters aufweist. Infolgedessen ist eine Filterpipettenspitze mit bestimmten Eigenschaften bzw. die Ausrichtung eines Filters erkennbar, was zur lagerichtigen Einbringung des Filters in das Röhrchen nutzbar ist. Auch kann durch Erfassung von fluoreszierenden Additiven eine Echtheitsprüfung von Filterpipettenspitzen vorgenommen werden.

Gemäß einer Ausgestaltung weist der Filter mindestens zwei Schichten mit unterschiedlich fluoreszierenden Additiven auf und/oder weist mindestens eine Schicht mit einem fluoreszierenden Additiv und mindestens eine Schicht ohne fluoreszierendes Additiv auf. Durch die unterschiedlich fluoreszierenden Additive ist der Filter mehrfach markiert. Ferner ermöglicht die Zuordnung von fluoreszierenden Additiven zu einer oder mehreren Schichten des Filters eine Erkennung der Lage des Filters.

Das Röhrchen ist gemäß einer Ausgestaltung in dem den Filter umgebenden Bereich durchsichtig, so daß der Filter von außen sichtbar ist. Gemäß einer bevorzugten Ausgestaltung ist das Röhrchen insgesamt durchsichtig.

Gemäß Anspruch 11 hat die Filterpipettenspitze einen im Durchgangskanal angeordneten, einen Abschnitt des Durchgangskanals ausfüllenden, porösen Filter, der einen Superabsorber enthält.

Der Superabsorber quillt bei Flüssigkeitskontakt auf und dichtet das Filter ab, so daß eingetretene Flüssigkeit nicht hindurchtritt und in eine mit der Filterpipettenspitze gegebenenfalls verbundene Pipette eintritt und diese kontaminiert. Superabsorber haben ein besseres Quellverhalten als die in Filter herkömmlicher Filterpipettenspitzen mit Flüssigkeits-Sperrwirkung eingesetzten Additive auf der Basis von Zellulose ("Zellulosegum"). Mittels Superabsorber wird zwar eine Flüssigkeitsbarriere erreicht. Das Filter bleibt jedoch luftdurchlässig, so daß eine eingesogene Probe verhältnismäßig leicht zurückgewonnen werden kann. Hierzu wird die Pipette wie bei einer üblichen Flüssigkeitsabgabe betätigt, so daß ein an der großen Öffnung anliegender Überdruck die Flüssigkeit aus der Filterpipettenspitze ausstößt.

Superabsorber können große Mengen an Wasser binden, wobei sie stark quellen. Superabsorber sind nicht ohne weiteres in flüssiger Probe lösbar. Diese Fähigkeiten sind typisch für Polymere, die ionische Gruppen enthalten. Die am meisten verbreiteten Superabsorber basieren auf vernetzter Polyacrylsäure. Superabsorber stehen meistens in Form eines Pulvers zur Verfügung, in der Regel mit weißer Farbe. Die Partikelgrößen liegen z.B. im Bereich zwischen einigen 10 µm und einigen 100 µm. Die Firma Degussa AG vermarktet unter der Bezeichnung "Creasorb Produkt Z 1069" einen für den erfindungsgemäßen Einsatz geeigneten Superabsorber. Die Firma BASF vermarktet unter der Bezeichnung "Luquasorb B 1110" einen weiteren für den erfindungsgemäßen Einsatz geeigneten Superabsorber.

Der Superabsorber kann auf verschiedene Weise in den porösen Filter integriert sein. Beispielsweise ist es möglich, den Filter mit mehreren Schichten auszuführen, zwischen denen eine Schicht aus dem Superabsorber angeordnet ist. Gemäß einer bevorzugten Ausgestaltung ist der Superabsorber in Hohlräumen des Filters eingelagert. Der Superabsorber wird in den Hohlräumen im Filter gehalten. Dort kommt er gegebenenfalls direkt in Kontakt mit eindringender Flüssigkeit, so daß er die Hohlräume mehr oder weniger sperrt und einen Flüssigkeitsdurchtritt verhindert.

Gemäß einer Ausgestaltung umfaßt der Filter mindestens zwei in Richtung des Durchgangskanals hintereinander angeordnete Schichten, von denen eine Schicht den Superabsorber enthält.

Die von Superabsorber freie Schicht kann verschiedenen Zwecken dienen. Beispielsweise verbessert sie in der oben beschriebenen Weise den Filtereffekt. Zusätzlich oder stattdessen verhindert sie, daß der Superabsorber ausblutet bzw. auskrümelt und die flüssige Probe kontaminiert. Bei herkömmlichen Filterpipettenspitzen mit selbst abdichtenden Filtern kann das Additiv ausbluten und auskrümeln und Proben kontaminieren, so daß beispielsweise eine PCR inhibiert wird. Bei Flüssigkeitskontakt wird dieses Problem bei herkömmlichen Filterpipettenspitzen noch verstärkt. Die erfindungsgemäße Filterpipettenspitze ermöglicht eine Wiedergewinnung der Probe auch bei leichtem Kontakt mit dem Filter, da die von Superabsorber freie Schicht eine Mitnahme des Superabsorbers durch die Flüssigkeit verhindert. Außerdem kommt die Flüssigkeit erst später mit dem Additiv in Berührung als bei herkömmlichen Filterpipettenspitzen.

Gemäß einer Ausgestaltung ist die den Superabsorber enthaltende Schicht näher an der großen Öffnung als die von Superabsorber freie Schicht angeordnet. Hierdurch wird die flüssige Probe von dem Superabsorber ferngehalten bzw. verhindert die von Superabsorber freie Schicht einen Kontakt der flüssigen Probe mit dem Superabsorber.

Gemäß einer Ausgestaltung ist die den Superabsorber enthaltende Schicht zwischen von Superabsorber freien Schichten angeordnet. Hierdurch kann der Filtereffekt verbessert werden und/oder ein Austreten des Superabsorbers aus beiden Enden des Filters verhindert werden.

Gemäß einer Ausgestaltung weist die von Superabsorber freie Schicht eine Porengröße von maximal etwa 50 µm auf. Diese Schicht verhindert ein Hindurchtreten von Superabsorber, bei dem die Teilchengröße minimal etwa 50 µm beträgt. Gemäß einer weiteren Ausgestaltung weist die von Superabsorber freie Schicht eine Porengröße von maximal etwa 30 µm auf. Diese Schicht verhindert ein Hindurchtreten von Superabsorber, bei denen die Teilchengröße minimal etwa 30 µm beträgt.

Gemäß einer Ausgestaltung enthält der Filter oder die den Superabsorber enthaltende Schicht des Filters etwa 10 bis 30 Gew.-% Superabsorber. Bei diesem Gewichtsanteil zeigt der Superabsorber bereits eine gute Barrierewirkung für Flüssigkeit, wobei dennoch eine Luftdurchlässigkeit erhalten bleiben kann.

Die nachfolgenden Ausgestaltungen betreffen sämtliche vorbeschriebenen Filterpipettenspitzen.

Gemäß einer Ausgestaltung weist mindestens eine Schicht des Filters eine Funktionalisierung auf. Die Funktionalisierung bewirkt beispielsweise eine verstärkte Bindung bestimmter Moleküle an die betreffende Schicht. Die Funktionalisierung wird beispielsweise durch Zusätze entsprechender pulverförmiger Additive bei der Herstellung des Filters bewirkt. Mögliche Funktionalisierungen sind reversed-phase-Materialien wie C18, Ionenaustauscher, Aktivkohle o.ä.

Gemäß einer weiteren Ausgestaltung weisen verschiedene Schichten des Filters verschiedene Funktionalisierungen auf.

Gemäß einer Ausgestaltung sind die Schichten des Filters lose aufeinandergeschichtet.

Gemäß einer Ausgestaltung sind die Schichten des Filters zu einem einteiligen Filterkörper miteinander verbunden. Der einteilige Filterkörper hat Handhabungsvorteile bei der Herstellung der Filterpipettenspitzen. Ferner werden die Sperrwirkung mindernde Spalten zwischen den verschiedenen Schichten vermieden. Der einteilige Filterkörper weist eine gesteigerte Sperrwirkung bei gleichbleibend gutem Durchflussverhalten auf. Dieser Filter ist z.B. integral gefertigt oder umfaßt zusammengefügte und miteinander verbundene Schichten.

Gemäß einer Ausgestaltung umfaßt der Durchgangskanal zwischen kleiner Öffnung und Filter ein Aufnahmevolumen zum Aufnehmen einer flüssigen Probe und ist der Durchgangskanal zwischen Filter und großer Öffnung ein Kanal zum Verlagern einer Gassäule. Das Aufnahmevolumen hat gemäß einer Ausgestaltung eine definierte Nenngröße, damit der Anwender für eine bestimmte Dosieraufgabe eine geeignete Filterpipettenspitze wählen kann. Das Röhrchen wird z.B. durch Spritzgießen aus geeignetem Kunststoff (z.B. Polyethylen (PE) oder Polypropylen (PP) hergestellt.

Der Filter wird z.B. gefertigt, indem ein Kunststoffgranulat für die erste Schicht in eine Form eingebracht und komprimiert wird, dann ein Kunststoffgranulat für eine zweite Schicht in die Form eingebracht und komprimiert wird, die Schichtung gesintert und anschließend der Filterkörper aus der Form ausgestoßen wird. Ein Filterkörper, der nur eine einzige Schicht umfaßt, ist herstellbar, indem das Granulat für die einzige Schicht in die Form eingebracht, komprimiert, gesintert und anschließend der Filterkörper ausgestoßen wird. Ein Additiv wird gegebenenfalls vor dem Einbringen in die Form in ein Granulat für eine der Schichten oder in das Granulat für den gesamten Filterkörper eingemischt. Die Kunststoffgranulate für den einschichtigen oder mehrschichtigen Filter sind z.B. aus Polyethylen (PE), insbesondere aus UHMW-PE.

Die Erfindung wird nachfolgend anhand der anliegenden Zeichnung eines Ausführungsbeispiels näher erläutert. In der Zeichnung zeigen:

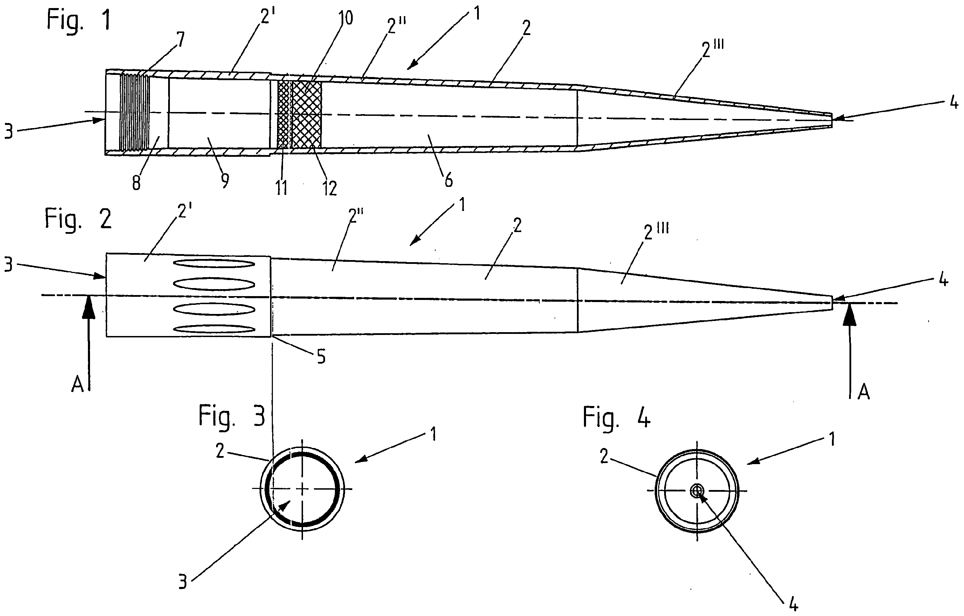

Fig. 1 die Filterpipettenspitze in einem Längsschnitt;
Fig. 2 dieselbe Filterpipettenspitze in einer Seitenansicht;
Fig. 3 dieselbe Filterpipettenspitze in einer Draufsicht;
Fig. 4 dieselbe Filterpipettenspitze in einer Unteransicht.

Die Filterpipettenspitze 1 hat ein Röhrchen 2, daß eine verhältnismäßig große Öffnung 3 an einem Ende und eine verhältnismäßig kleine Öffnung 4 am anderen Ende aufweist. Generell verjüngt sich das Röhrchen 2 von dem Ende mit der großen Öffnung 3 zum Ende mit der kleinen Öffnung 4 hin. Es weist zwischen den Öffnungen 3, 4 Abschnitte 2', 2", 2'" auf, wobei die Abschnitte 2', 2" durch einen Absatz 5 getrennt sind. Außen weisen sie etwa dieselbe Konizität auf. Der Abschnitt 2'" ist hingegen stärker konisch als die vorbezeichneten Abschnitte ausgeführt.

Zwischen der großen Öffnung 2 und der kleinen Öffnung 3 erstreckt sich ein Durchgangskanal 6.

Der Abschnitt 2' hat innen mehrere umlaufende Vorsprünge 7, die den abdichtenden Aufstecken auf den konischen Ansatz einer Pipette dienen. Im Aufsteckbereich 8 ist der Durchgangskanal 6 verhältnismäßig stark konisch ausgeführt. Daran grenzt ein Abschnitt 9 verringerter Konizität an. In den Abschnitten 2" und 2'" entspricht jeweils die Konizität innen der Konizität außen.

In den Durchgangskanal 6 ist angrenzend an den Abschnitt 2' in den Abschnitt 2" ein Filter 10 eingepreßt. Der Filter 10 füllt einen Abschnitt des Durchgangskanals 6 vollständig aus. Der Filter 10 ist einteilig und umfaßt zwei Schichten 11, 12. Die näher an der großen Öffnung 3 angeordnete feinporige Schicht 11 hat eine Porengröße von maximal etwa 20 µm die näher an der Öffnung 4 angeordnete grobporige Schicht 12 hat eine Porengröße von etwa 20 bis 50 µm. Die Porengrößen sind gemessen durch Quecksilberintrusionen gemäß der DIN 66 133 beschriebenen Verfahren nach Zerlegen des Filters 10 in die beiden Schichten, z.B. mittels Skapell. Die beiden Schichten 11, 12 des Filters 10 bestehen aus gesintertem UHMW-PE.

Die Schichten 11 und 12 haben eine unterschiedliche Färbung. Vorzugsweise hat die feinporige Schicht 11 eine bunte Farbe oder ist schwarz oder grau und hat die grobporige Schicht 12 die Farbe weiß. Die Färbungen erfolgen durch Einsatz entsprechend gefärbter Granulate bei der Herstellung des Filters 10.

Die Schicht 11 ist hydrophil und die Schicht 12 ist hydrophob. Diese Eigenschaft wird durch Additive eingestellt, die dem Granulat für die Herstellung des Filters 10 zugegeben werden.

Zum Pipettieren wird die Filterpipettenspitze 1 mit einer Pipette verbunden, indem der Aufsteckbereich 8 auf einen Ansatz aufgesteckt wird. Beim Einsaugen von Flüssigkeit in den Durchgang 6 zwischen kleiner Öffnung 4 und Filter 10 werden Aerosole von dem Filter 10 daran gehindert, in die Pipette einzudringen. Dabei wird durch die grobporige Schicht 12 eine Volumen- und Vorfilteration bewirkt. Die feinporige Schicht 11 hält feinste Tröpfchen zurück.

Die Färbungen bzw. Farbkombination des Filters 10 ist codiert, d. h. der Filterpipettenspitze 1 mit bestimmten Eigenschaften ist ein bestimmter Farbcode zugeordnet. Der Anwender kann anhand der Färbung des Filters 10 leicht erkennen, welche Art Filterpipettenspitze 1 er vor sich hat. Dementsprechend werden andere Filterpipettenspitzen 1 mit Filtern 10 ausgerüstet, die abweichende Farbkombinationen aufweisen.

## Patentansprüche

1. Filterpipettenspitze mit einem Röhrchen (2) mit einer verhältnismäßig großen Öffnung (3) am einen Ende zum Verbinden mit einer Pipette, einer verhältnismäßig kleinen Öffnung (4) am anderen Ende für den Durchgang von Flüssigkeit und einem Durchgangskanal (6) zwischen der großen Öffnung (3) und der kleinen Öffnung (4) und einem im Durchgangskanal (6) angeordneten, einen Abschnitt des Durchgangskanals ausfüllenden, porösen Filter (10) umfassend mindestens zwei in Richtung des Durchgangskanal hintereinander angeordnete Schichten (11, 12), von denen eine feinporige Schicht (11) der großen Öffnung (3) zugekehrt ist und eine Porengröße von maximal 20 µm aufweist und eine der kleinen Öffnung zugekehrte grobporige Schicht (12) eine Porengröße von 20 bis 50 µmaufweist, die beiden Schichten (11, 12) unterschiedliche Porengrößen aufweisen und die Schichten (11, 12) des Filters (10) zu einem einteiligen Filterkörper miteinander verbunden sind, wobei der Durchgangskanal (6) zwischen kleiner Öffnung (4) und Filter (10) ein Aufnahmevolumen zum Aufnehmen einer flüssigen Probe umfasst und zwischen Filter (10) und großer Öffnung (3) ein Kanal zum Verlagern einer Gassäule ist.

2. Filterpipettenspitze nach Anspruch 1, bei der die feinporige Schicht (11) eine Porengröße von maximal 10 µmund/oder die grobporige Schicht (12) eine Porengröße von 20 bis 40 µm aufweist.

3. Filterpipettenspitze nach Anspruch 1 oder 2, bei der die Erstreckung in Richtung des Durchgangskanals (6) der feinporigen Schicht (11) kleiner ist, als die Erstreckung der grobporigen Schicht (12).

4. Filterpipettenspitze, insbesondere nach einem der Ansprüche 1 bis 3, bei der die hintereinander angeordneten Schichten (11, 12) unterschiedlich hydrophil oder unterschiedlich hydrophob sind oder von denen die eine Schicht (11) hydrophil und die andere Schicht (12) hydrophob ist.

5. Filterpipettenspitze nach Anspruch 4, bei der die hydrophile Schicht (11) näher an der großen Öffnung (3) als die hydrophobe Schicht (12) angeordnet ist.

6. Filterpipettenspitze nach Anspruch 4 oder 5, bei der die Erstreckung in Richtung des Durchgangskanals (6) der hydrophilen Schicht kleiner ist, als die Erstreckung der hydrophoben Schicht.

7. Filterpipettenspitze nach einem der Ansprüche 1 bis 6, bei der der Filter (10) mindestens eine Markierung aufweist.

8. Filterpipettenspitze nach Anspruch 7, bei der der Filter (10) mindestens zwei Schichten (11, 12) mit unterschiedlichen Färbungen aufweist.

9. Filterpipettenspitze nach Anspruch 7 oder 8, bei der der Filter (10) mindestens ein fluoreszierendes Additiv umfaßt.

10. Filterpipettenspitze nach einem der Ansprüche 1 bis 9, bei dem das Röhrchen (2) zumindest in dem den Filter (10) umgebenden Bereich durchsichtig ist.

11. Filterpipettenspitze nach einem der Ansprüche 1 bis 10, bei der der Filter einen Superabsorber enthält.

12. Filterpipettenspitze nach Anspruch 11, bei der der Superabsorber in Hohlräumen des Filters eingelagert ist.

13. Filterpipettenspitze nach einem der Ansprüche 1 bis 12, bei der mindestens eine Schicht (11, 12) des Filters (10) eine Funktionalisierung aufweist.

## Claims

1. Filter pipette tip with a small tube (2) with a relatively large aperture (3) at one end for attaching to a pipette, a relatively small aperture (4) at the other end for the passage of liquid and a through-channel (6) between the large aperture (3) and the small aperture (4) and a porous filter (10) arranged in the through-channel (6) filling up a portion of the through-channel and comprising at least two layers (11, 12) arranged in series in the direction of the through-channel of which a fine-pore layer (11) is directed at the large aperture (3) and has a pore size of a maximum of 20 µmand a coarse-pore layer (12) directed at the small aperture has a pore size of 20 to 50 µm, the two layers (11, 12) having different pore sizes and the layers (11, 12) of the filter (10) are attached to one another forming a one-piece filter body, wherein the through-channel (6) between the small aperture (4) and the filter (10) comprises a receiving volume for receiving a liquid sample and between the filter (10) and the large aperture (3) is a channel for displacing a gas column.

2. Filter pipette tip according to claim 1, in which the fine-pore layer (11) has a pore size of a maximum of 10 µmand/or the coarse-pore layer (12) a pore size of 20 to 40 µm.

3. Filter pipette tip according claim 1 or 2, in which the extension of the fine-pore layer (11) in the direction of the through-channel (6) is smaller than the extension of the coarse-pore layer (12).

4. Filter pipette tip according to any one of claims 1 to 3, in which the layers (11, 12) arranged in series are variably hydrophilic or variably hydrophobic or of which the one layer (12) is hydrophilic and the other layer (11) is hydrophobic.

5. Filter pipette tip according to claim 4, in which the hydrophilic layer (11) is arranged closer to the large aperture (3) than the hydrophobic layer (12).

6. Filter pipette tip according to claim 4 or 5, in which the extension of the hydrophilic layer in the direction of the through-channel (6) is smaller than the extension of the hydrophobic layer.

7. Filter pipette tip according to any one of claims 1 to 6, in which the filter (10) has at least one marking.

8. Filter pipette tip according to claim 7, in which the filter (10) has at least two layers (11, 12) with different colorations.

9. Filter pipette tip according claim 7 or 8, in which the filter (10) comprises at least one fluorescent additive.

10. Filter pipette tip according to any one of claims 1 to 9, in which the small tube (2) at least in the region surrounding the filter (10) is transparent.

11. Filter pipette tip according to any one of claims 1 to 10, in which the filter (10) contains a superabsorber.

12. Filter pipette tip according to claim 11, in which the superabsorber is layered in hollow spaces of the filter.

13. Filter pipette tip according to any one of claims 1 to 12, in which the at least one layer (11, 12) of the filter (10) is functionalised.

## Revendications

1. Embout de pipette avec filtre avec un tube (2) avec une ouverture relativement grande (3) à une extrémité pour la connexion à une pipette, une ouverture relativement petite (4) à l'autre extrémité pour le passage de liquide et un canal de passage (6) entre la grande ouverture (3) et la petite ouverture (4), et un filtre poreux (10) disposé dans le canal de passage (6), remplissant une section du canal de passage, comprenant au moins deux couches (11, 12) disposées l'une derrière l'autre en direction du canal de passage, parmi lesquelles une couche à pores fins (11) est tournée vers la grande ouverture (3) et présente une taille de pores de 20 µm maximum, et une couche à pores grossiers (12) tournée vers la petite ouverture présente une taille de pores de 20 à 50 µm, les deux couches (11, 12) présentent différentes tailles de pores et les couches (11, 12) du filtre (10) sont connectées ensemble en un corps de filtre d'une pièce, dans lequel le canal de passage (6) comprend entre la petite ouverture (4) et le filtre (10) un volume de réception pour la réception d'un échantillon liquide et est entre le filtre (10) et la grande ouverture (3) un canal pour le déplacement d'une colonne de gaz.

2. Embout de pipette avec filtre selon la revendication 1, dans lequel la couche à pores fins (11) présente une taille de pores de 10 µm maximum et/ou la couche à pores grossiers (12) présente une taille de pores de 20 à 40 µm.

3. Embout de pipette avec filtre selon la revendication 1 ou 2, dans lequel le prolongement en direction du canal de passage (6) de la couche à pores fins (11) est inférieur au prolongement de la couche à pores grossiers (12).

4. Embout de pipette avec filtre, notamment selon une des revendications 1 à 3, dans lequel les couches disposées l'une derrière l'autre (11, 12) sont différemment hydrophiles ou différemment hydrophobes ou une couche (11) parmi elles est hydrophile et l'autre couche (12) est hydrophobe.

5. Embout de pipette avec filtre selon la revendication 4, dans lequel la couche hydrophile (11) est disposée plus près de la grande ouverture (3) que la couche hydrophobe (12).

6. Embout de pipette avec filtre selon la revendication 4 ou 5, dans lequel le prolongement en direction du canal de passage (6) de la couche hydrophile est inférieur au prolongement de la couche hydrophobe.

7. Embout de pipette avec filtre selon une des revendications 1 à 6, dans lequel le filtre (10) présente au moins un marquage.

8. Embout de pipette avec filtre selon la revendication 7, dans lequel le filtre (10) présente au moins deux couches (11, 12) avec différentes colorations.

9. Embout de pipette avec filtre selon la revendication 7 ou 8, dans lequel le filtre (10) comprend au moins un additif fluorescent.

10. Embout de pipette avec filtre selon une des revendications 1 à 9, dans lequel le tube (2) est translucide au moins dans la région entourant le filtre (10).

11. Embout de pipette avec filtre selon une des revendications 1 à 10, dans lequel le filtre contient un super absorbeur.

12. Embout de pipette avec filtre selon la revendication 11, dans lequel le super absorbeur est entreposé dans des espaces creux du filtre.

13. Embout de pipette avec filtre selon une des revendications 1 à 12, dans lequel au moins une couche (11, 12) du filtre (10) présente une fonctionnalisation.
